# DEMANDE DE BREVET EUROPEEN

(11) **EP 1 603 081 A1**
(43) Date de publication de la demande: **07.12.2005**
(21) Numéro de dépôt: 05291160.9
(22) Date de dépôt: 30.05.2005
(51) Int. Cl.: G07B 15/00, G07F 7/00

(54) **Procédé et système de gestion d'une flotte de véhicules**

(30) Priorité: 01.06.2004 FR 0405889
(71) Demandeur: JC Decaux SA, 92200 Neuilly-sur-Seine (FR)
(72) Inventeur: Le Gras, Jacques, 78950 Gambais (FR); Darras, Jacques, 78120 Rambouillet (FR)
(74) Mandataire: Louiset, Raphael

(57) **Abrégé**

L'invention concerne un procédé de gestion d'une flotte de véhicules (1) adaptés pour être verrouillés sur des postes de verrouillage fixes (2), qui communiquent avec au moins un système de gestion (4, S) des véhicules (1), chaque véhicule (1) comprenant un circuit électronique (9) doté d'une mémoire (15) et adapté pour communiquer avec un des postes de verrouillage (2) lorsque ledit véhicule (1) est verrouillé sur ce poste de verrouillage (2), ce procédé comprenant les étapes suivantes :
- emprunt d'un véhicule (1) ;
- détection d'un mouvement du véhicule (1) ;
- détection de l'arrêt du véhicule ;
- mémorisation, dans une mémoire (15) interne au véhicule (1), d'un paramètre indicatif du temps écoulé entre l'emprunt et l'arrêt du véhicule (1) ;
- verrouillage du véhicule (2) sur un poste de verrouillage (2) ;
- détection de ce verrouillage par le dispositif de gestion (4, S) des véhicules (1) ;
- transmission dudit paramètre temporel au dispositif de gestion (4, S) par l'intermédiaire du poste de verrouillage (2).

## Description

L'invention a trait à la gestion des flottes de véhicules à usage collectif, et en particulier, bien que non seulement, à la gestion d'une flotte de bicyclettes proposées à la location.

Aujourd'hui certaines villes sont équipées de systèmes automatisés de location de bicyclettes permettant à chaque citadin d'emprunter une bicyclette pour effectuer un parcours urbain.

Ces systèmes comportent une pluralité de bornes à chacune desquelles peut être accrochée une bicyclette, ces bornes étant reliées à un automate muni d'une interface utilisateur permettant à un usager de commander, contre communication d'informations spécifiques, telles que ses coordonnées bancaires ou un code utilisateur prédéterminé, le déverrouillage d'une borne pour permettre à l'usager de disposer de la bicyclette correspondante.

Une procédure de location d'une bicyclette, une borne et ses moyens de verrouillage sont décrits en détails dans les demandes internationales publiées sous les numéro WO 02/09 5698 et WO 01/54080 au nom de la demanderesse, auxquelles l'homme du métier pourra se référer.

Dans certaines villes, la location d'une bicyclette au moyen d'un tel système est payante, le prix de la location dépendant alors de la durée d'utilisation de la bicyclette par l'usager.

Il apparaît donc nécessaire de mesurer cette durée d'utilisation. Aujourd'hui, pour mesurer cette durée, le système procède comme suit.

Tout d'abord, le système mémorise l'heure de l'emprunt de la bicyclette, c'est-à-dire, en pratique, l'heure à laquelle il a commandé le déverrouillage de la borne.

Ensuite, à la remise de la bicyclette, le système prend en compte l'heure courante et l'heure mémorisée d'emprunt pour calculer, à partir de la différence des deux, le prix de la location.

Tant qu'il ne subit aucune panne, un tel système fonctionne sans accroc et donne entière satisfaction.

Un tel système s'avère toutefois défaillant en cas de panne, notamment en cas de panne de courant. En effet, il n'est plus en mesure dans ce cas de détecter la remise de la bicyclette et ignore de ce fait l'heure à laquelle cette remise a eu lieu.

Pour le calcul de la durée d'utilisation, on considère alors :
- soit que l'heure de remise de la bicyclette est confondue avec l'heure à laquelle le courant est de retour (ce qui est favorable au loueur mais défavorable au locataire),
- soit que l'heure de remise de la bicyclette est confondue avec l'heure à laquelle le courant a été coupé (ce qui est favorable au locataire mais défavorable au loueur).

Dans un cas comme dans l'autre, la facturation est sans rapport avec la durée réelle de la location, ce décalage s'accroissant avec la durée de la panne. Il en résulte un manque de fiabilité du système, qui se traduit pour le loueur par le risque que, soupçonnant un abus, l'usager entende obtenir réparation d'un prétendu préjudice.

L'invention vise à pallier les inconvénients précités, en proposant un procédé et un système de gestion d'une flotte de véhicules présentant une fiabilité accrue.

A cet effet, l'invention propose, selon un premier aspect, un procédé de gestion d'une flotte de véhicules adaptés pour être verrouillés sur des postes de verrouillage fixes, qui communiquent avec au moins un système de gestion des véhicules, chaque véhicule comprenant un circuit électronique doté d'une mémoire et adapté pour communiquer avec un des postes de verrouillage lorsque ledit véhicule est verrouillé sur ce poste de verrouillage, ce procédé comprenant les étapes suivantes :
- emprunt d'un véhicule ;
- détection d'un mouvement du véhicule ;
- détection de l'arrêt du véhicule ;
- mémorisation, dans une mémoire interne au véhicule, d'un paramètre indicatif du temps écoulé entre l'emprunt et l'arrêt du véhicule ;
- verrouillage du véhicule sur un poste de verrouillage ;
- détection de ce verrouillage par le dispositif de gestion des véhicules ;
- transmission dudit paramètre temporel au dispositif de gestion par l'intermédiaire du poste de verrouillage.

De la sorte, même en cas de panne de courant, le système est en mesure, au retour du courant, de connaître la durée exacte d'utilisation du véhicule, c'est-à-dire la durée séparant le moment de son emprunt et sa remise, qui coïncide avec son dernier arrêt.

Les caractéristiques suivantes peuvent être prévues, éventuellement en combinaison :
- il est prévu une étape de détermination d'un montant de transaction par le dispositif de gestion en fonction dudit paramètre temporel ;
- il est prévu une étape de mise en route d'un compteur temporel dès lors qu'un mouvement du véhicule est détecté ;
- ladite étape de mémorisation consiste à mémoriser la valeur courante du compteur temporel dès lors que l'arrêt du véhicule est détecté ;
- il est prévu une étape d'interrogation de la mémoire interne ;
- il est prévu une étape de transaction prenant en compte la valeur mémorisée ;
- il est prévu une étape d'initialisation et d'arrêt du compteur ;
- lesdites étapes d'interrogation de la mémoire interne, de transaction et/ou d'initialisation et d'arrêt du compteur sont effectuées sous la commande d'un automate extérieur au véhicule ;
- il est prévu une étape de mémorisation, dans une première zone de la mémoire interne, de l'heure courante dès lors qu'un mouvement du véhicule est détecté ;
- il est prévu une étape de mémorisation, dans une seconde zone de la mémoire interne, de l'heure courante dès lors que l'arrêt du véhicule est détecté ;
- il est prévu une étape d'interrogation de la mémoire interne ;
- il est prévu une étape de transaction prenant en compte la différence entre les valeurs mémorisées dans les première et seconde zones de la mémoire interne ;
- lesdites étapes d'interrogation de la mémoire interne et/ou de transaction sont effectuées sous la commande d'un automate extérieur au véhicule ;
- il est prévu une étape de mémorisation, dans une mémoire externe au véhicule, de l'heure courante dès lors que le véhicule est emprunté ;
- l'heure courante mémorisée dans la mémoire externe est fournie par une horloge interne au véhicule ;
- l'heure courante mémorisée dans la mémoire externe est fournie par une horloge externe au véhicule ;
- il est prévu une étape de mémorisation, dans ladite mémoire interne, de l'heure courante dès lors que l'arrêt du véhicule est détecté ;
- il est prévu une étape d'interrogation de la mémoire interne ;
- il est prévu une étape de transaction prenant en compte la différence entre l'heure mémorisée dans la mémoire interne et l'heure mémorisée dans la mémoire externe ;
- lesdites étapes d'interrogation de la mémoire interne et/ou de transaction sont effectuées sous la commande d'un automate extérieur au véhicule.

Suivant un deuxième aspect, l'invention propose un système de gestion d'une flotte de véhicules qui, pour la mise en oeuvre du procédé décrit ci-dessus, comprend :
- une pluralité de véhicules ;
- une pluralité de postes de verrouillage desdits véhicules ; et
- un dispositif de gestion des véhicules, apte à commander à distance les postes de verrouillage ; système dans lequel chaque véhicule comprend :
- des moyens de détection d'un mouvement et de l'arrêt du véhicule ;
- un circuit électronique doté d'une mémoire et adapté pour communiquer avec un des postes de verrouillage lorsque ledit véhicule est verrouillé sur ce poste de verrouillage ;
- des moyens pour inscrire dans la mémoire un paramètre temporel lié au mouvement et à l'arrêt du véhicule,
et dans lequel chaque poste de verrouillage est muni de moyens de communication à distance avec le dispositif de gestion.

D'autres objets et avantages de l'invention apparaîtront à la lumière de la description faite ci-après en référence aux dessins annexés dans lesquels :
- la figure 1 est une vue en perspective illustrant schématiquement un système de gestion d'une flotte de bicyclettes ;
- la figure 2 est un diagramme illustrant schématiquement l'organisation interne du système de la figure 1 ;
- les figures 3 à 5 sont des diagrammes illustrant un procédé de gestion d'une flotte de véhicules selon l'invention, suivant trois modes de réalisation distincts.

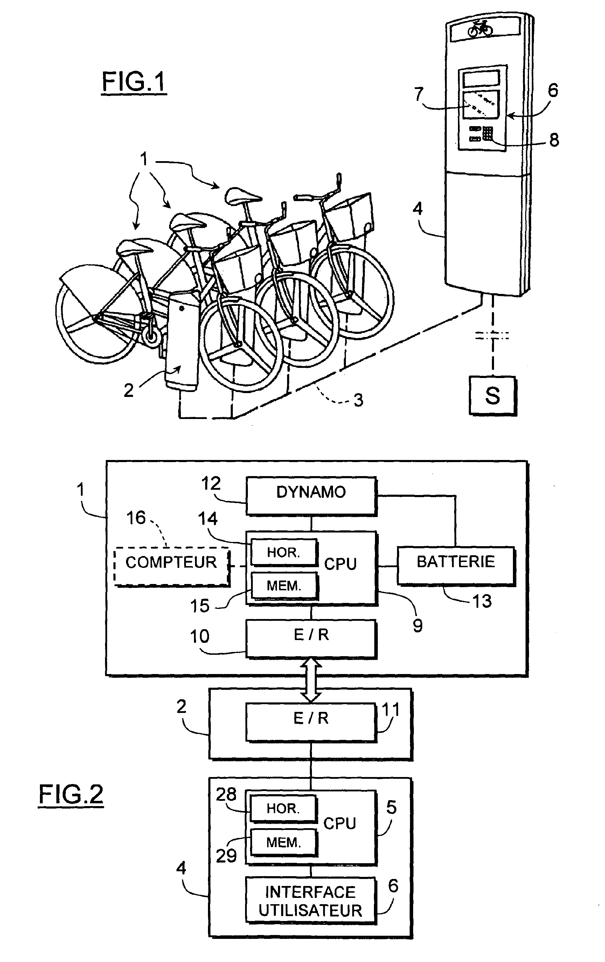

Sur la figure 1 est représenté un système de gestion d'une flotte de bicyclettes 1 proposées à la location, notamment en milieu urbain.

Les bicyclettes 1 sont ici représentées dans une position remisée où chacune d'entre elles est fixée temporairement à un poste de verrouillage tel qu'une borne 2 de stockage, laquelle est munie d'un système de verrouillage (non représenté) qui coopère avec des moyens d'accrochage (non représentés) prévus sur la bicyclette 1 pour empêcher son utilisation par une personne non autorisée.

Les bornes 2 peuvent être regroupées en une ou plusieurs stations de stockage de bicyclettes, une seule station étant représentée sur la figure 1.

Les bornes 2 d'une même station sont raccordées, de préférence par un câble enterré 3, représenté en traits interrompus sur la figure 1, à un automate 4 accessible aux usagers et comportant une unité centrale de contrôle (CPU) 5 ainsi qu'une interface utilisateur 6 reliée au CPU 5 et comprenant un écran 7 et un clavier 8. Comme cela est représenté sur la figure 1, l'automate 4 de chaque station peut communiquer à distance avec un serveur de gestion S de la flotte de bicyclettes.

Chaque bicyclette 1 est également équipée d'une unité centrale de contrôle (CPU) 9 et d'un émetteur/récepteur 10 relié au CPU 9. Chaque borne 2 est quant à elle équipée d'un émetteur/récepteur 11, les émetteurs/récepteurs 10, 11 formant conjointement une interface de communication entre le CPU 5 de l'automate 4 et le CPU 9 de la bicyclette 1.

A la demande d'un utilisateur, le système de verrouillage d'une borne 2 donnée peut être désactivé sous la commande de l'automate 4 pour permettre à l'utilisateur de disposer de la bicyclette 1 correspondante. Ce déverrouillage peut par exemple être effectué sur autorisation du serveur de gestion S, après que l'utilisateur s'est identifié sur l'automate 4, par exemple au moyen d'une carte électronique, d'un code ou tout autre moyen équivalent.

Le CPU 9 de la bicyclette 1 est par exemple porteur d'un identifiant spécifique associé à la bicyclette 1, que l'automate 4 lit et mémorise au moment de la location. Cependant, suivant un mode de réalisation préféré, le CPU 9 de la bicyclette 1 ne comporte pas d'identifiant de celle-ci, mais reçoit de l'automate 4 un identifiant propre à l'utilisateur qui emprunte la bicyclette 1. Cet identifiant est stocké dans la mémoire 15 au moment de l'emprunt de la bicyclette 1.

La bicyclette 1 comprend en outre :
- une dynamo 12, montée sur l'une des roues de la bicyclette 1, et raccordée électriquement au CPU 9, et
- une batterie d'accumulateurs 13, raccordée électriquement à la fois à la dynamo 12 et au CPU 9.

La dynamo 12 est de préférence intégrée dans le moyeu de l'une des roues de la bicyclette, à des fins de compacité et pour éviter les éventuelles dégradations auxquelles sont exposées les classiques dynamos à friction.

Des brevets ont été déposés par le passé pour de telles dynamos intégrées dans un moyeu. L'homme du métier pourra s'y référer.

Lorsque la bicyclette 1 est en mouvement, le CPU 9 est alimenté électriquement par la dynamo 12, laquelle assure en outre la charge de la batterie 13. Lorsque la bicyclette 1 est au contraire arrêtée, le CPU 9 est alimenté électriquement par la batterie 13, le basculement étant effectué sans discontinuité. De la sorte, le CPU 9 est alimenté électriquement en permanence.

Le CPU 9 comporte en outre une horloge interne 14 et une mémoire interne 15 de type flash dans laquelle, comme nous le verrons par la suite, peuvent être stockées une ou plusieurs valeurs d'horloge. La bicyclette peut également comprendre un compteur temporel 16 externe au CPU 9 mais relié à et commandé par celui-ci. L'utilité de ce compteur 16 apparaîtra dans ce qui va suivre.

Le CPU 9 est programmé pour détecter le mouvement ou, au contraire, l'arrêt de la bicyclette 1. Cette détection peut être effectuée au moyen d'un roulement instrumenté dont est équipé le moyeu de l'une des roues et relié électriquement au CPU, ou par détection d'un signal électrique en provenance de la dynamo 12.

Cette architecture permet, comme nous allons le voir, de gérer la flotte avec une efficacité accrue.

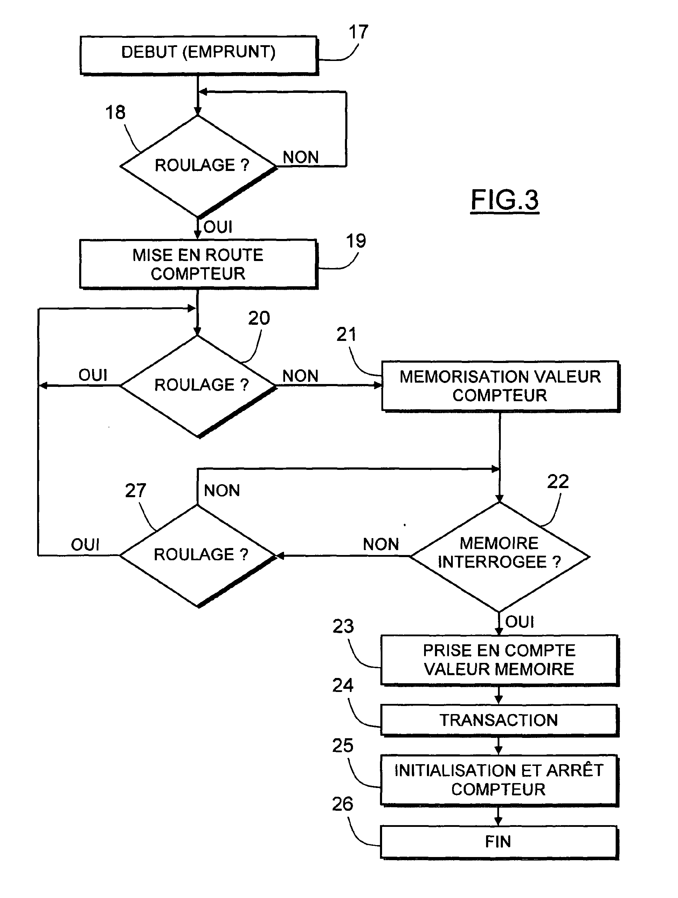

Dans ce qui suit, on décrit trois procédés de gestion de la flotte, en référence aux figures 3, 4 et 5 respectivement.

Un premier procédé de gestion de la flotte, décrit à présent en référence à la figure 3, comprend tout d'abord une étape (17) d'emprunt de la bicyclette 1. Cette étape (17) se traduit, concrètement, par le déverrouillage de la borne 2 correspondante sous la commande du CPU 5 de l'automate 4.

L'étape suivante consiste à détecter (18) le roulage de la bicyclette 1. Cette détection est effectuée au sein de la bicyclette 1 elle-même, et ce à chaque instant.

Dès lors que le roulage est détecté (c'est-à-dire, en pratique, dès lors que l'usager se saisit de la bicyclette 1 et la sépare de la borne 2), le CPU 9 commande (19) la mise en route du compteur 16, lequel était auparavant initialisé.

La détection du roulage (20) est effectuée sans arrêt. Dès lors que l'arrêt de la bicyclette 1 est détecté (ce qui se traduit par exemple par l'absence de signal électrique en provenance de la dynamo 12), la valeur courante du compteur 16 est stockée (21) dans la mémoire 15, sous la commande du CPU 9.

Dans l'hypothèse où l'arrêt de la bicyclette 1 correspond à sa remise à une borne 2 par l'utilisateur, ce qui met effectivement fin à la location, les CPU 5, 9 sont mis en communication (à supposer que le système soit alimenté en courant). Dès qu'il en reçoit l'instruction (22), par exemple sous la commande de l'automate 4 auprès duquel s'est rendu le locataire désireux de régler la location, le CPU 9 de la bicyclette 1 interroge la mémoire 15 et transmet au CPU 5 de l'automate 4 la valeur mémorisée, indicative de la durée réelle séparant l'emprunt de la bicyclette 1 de sa remise, afin que cette valeur soit prise en compte (23) pour le calcul du montant tarifaire de la location, lequel calcul peut être effectué au sein de l'automate (4) ou du serveur de gestion S.

Une fois la transaction effectuée (24) (le locataire ayant par exemple communiqué à l'automate ses coordonnées bancaires ou un code client prédéterminé, ou encore introduit une carte d'abonnement personnalisée), le CPU 5 de l'automate 4 commande (25), via le CPU 9 de la bicyclette 1, la réinitialisation et l'arrêt du compteur 16, la bicyclette 1 étant alors disponible (26) pour une location ultérieure.

Il se peut toutefois que l'arrêt de la bicyclette 1 ne corresponde pas à sa remise mais à un arrêt temporaire, suivi d'une nouvelle utilisation de la bicyclette 1 par le même usager qui, par exemple dans l'intention de faire une course, s'est momentanément séparé de son véhicule.

Dans une telle situation, la mémoire interne 15 n'étant pas interrogée dans l'immédiat, le roulage est alors de nouveau détecté (27) (lorsque le locataire reprend la route). Le compteur 16 ayant continué à tourner, la nouvelle valeur courante est inscrite dans la mémoire 15 dès lors qu'un nouvel arrêt est détecté. Ces étapes (20, 21, 22, 27) sont répétées tant que la mémoire 15 n'est pas interrogée, la valeur prise en compte par le CPU 5 de l'automate 4 étant, in fine, la valeur du compteur 16 mémorisée au moment du dernier arrêt.

Cette valeur, indicative de la durée exacte séparant l'emprunt de la remise de la bicyclette 1, est indépendante de l'état du système présent à la station (automate 4 et bornes 2), y compris lorsque ce dernier a été mis hors service, soit à la suite d'une panne, soit à la suite d'une intervention nécessitant, par exemple, une coupure du courant ou la mise hors circuit du CPU 5 de l'automate 4. Il en résulte une fiabilité accrue du système, son état n'ayant notamment aucune conséquence sur le montant de la transaction.

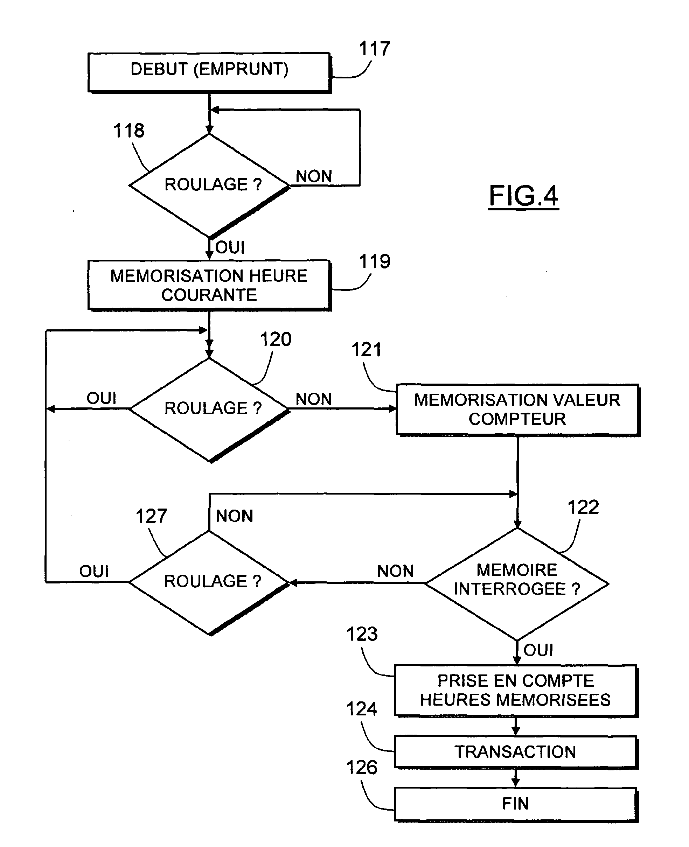

L'on décrit à présent un procédé de gestion de la flotte suivant un second mode de réalisation, en référence à la figure 4.

Ce procédé comprend tout d'abord, tout comme décrit ci-dessus, une étape (117) d'emprunt de la bicyclette 1, qui se traduit, concrètement, par le déverrouillage de la borne 2 correspondante sous la commande du CPU 5 de l'automate 6.

L'étape suivante (118) consiste à détecter le roulage de la bicyclette 1. Cette détection est effectuée au sein de la bicyclette 1 elle-même. Dès lors que le roulage est détecté (c'est-à-dire, en pratique, dès lors que l'usager se saisit de la bicyclette et la sépare de la borne), le CPU 9 inscrit (119) dans une première zone de la mémoire 15 la valeur courante de son horloge 14 (c'est-à-dire l'heure courante interne propre au CPU 9).

La détection du roulage (120) est effectuée sans arrêt. Dès lors que l'arrêt de la bicyclette 1 est détecté, la valeur courante de l'horloge 14 est stockée (121) dans une seconde zone de la mémoire 15, sous la commande du CPU 9.

Dans l'hypothèse où l'arrêt de la bicyclette 1 correspond à sa remise à une borne 2 par l'utilisateur, ce qui met effectivement fin à la location, les CPU 5, 9 sont mis en communication (à supposer que le système soit alimenté en courant). Dès qu'il en reçoit l'instruction (122), par exemple sous la commande de l'automate 4 auprès duquel s'est rendu le locataire désireux de régler la location, le CPU 9 de la bicyclette 1 interroge la mémoire 15 et transmet au CPU 5 de l'automate 4 les deux valeurs mémorisées, dont la différence est indicative de la durée réelle séparant l'emprunt de la bicyclette 1 de sa remise, afin que cette durée soit prise en compte (123) pour le calcul du montant tarifaire de la location.

Une fois la transaction effectuée (124), la bicyclette est immédiatement disponible pour une location ultérieure (126). Contrairement au premier mode de réalisation, le second, qui met à profit l'horloge interne 14 du CPU 9, ne nécessite pas l'utilisation d'un compteur externe, aucune étape de réinitialisation n'étant en outre nécessaire.

Lorsque l'arrêt de la bicyclette 1 s'avère en fait temporaire, la mémoire 15 n'étant pas interrogée dans l'immédiat, le roulage est alors de nouveau détecté (127) dès lors que le locataire se sert à nouveau de la bicyclette.

La nouvelle valeur courante de l'horloge 14 est inscrite dans la seconde zone de la mémoire 15 dès lors qu'un nouvel arrêt est détecté. Cette succession d'étapes (120, 121, 122, 127) est répétée tant que la mémoire 15 n'est pas interrogée, les valeurs prises en compte par le CPU 5 de l'automate 4 étant in fine, d'une part la valeur d'horloge mémorisée au moment de la première détection de roulage (ce moment coïncide avec l'emprunt de la bicyclette 1 puisque un mouvement de celle-ci est nécessaire pour la séparer de la borne 2 à laquelle elle était accrochée) et, d'autre part, la valeur d'horloge mémorisée au moment du dernier arrêt, c'est-à-dire, en pratique, au moment de la remise de la bicyclette 1.

La différence de ces valeurs est indicative de la durée exacte séparant l'emprunt de la remise de la bicyclette 1. Comme pour le premier mode de réalisation, les valeurs mémorisées (et donc leur différence) sont les mêmes quel que soit l'état du système, y compris lorsque ce dernier a été mis hors service, soit à la suite d'une panne, soit à la suite d'une intervention nécessitant, par exemple, une coupure du courant ou la mise hors circuit du CPU 5 de l'automate 4. Il en résulte que, comme précédemment, l'état du système n'affecte pas le montant de la transaction.

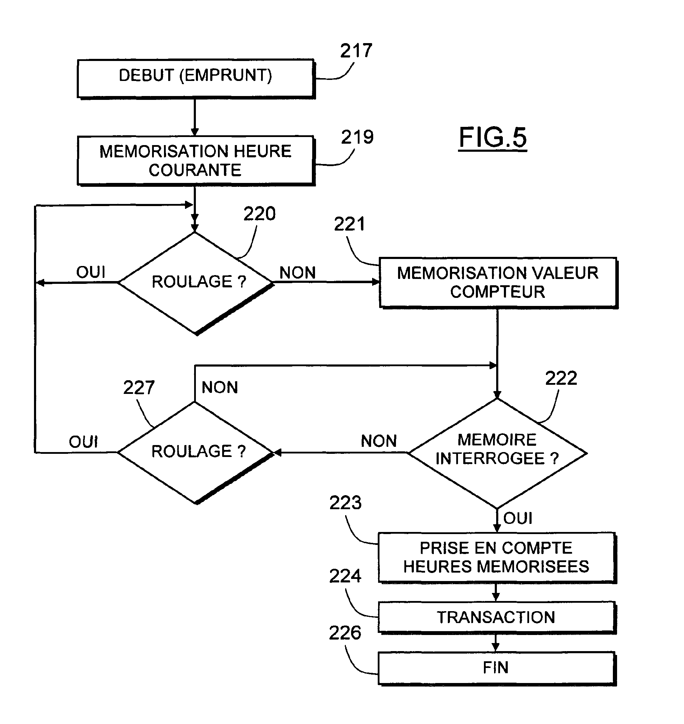

L'on décrit à présent un procédé de gestion de la flotte suivant un troisième mode de réalisation, en référence à la figure 5.

Pour ce mode de réalisation, sont mises à profit une horloge 28 et une mémoire 29 internes du CPU 5 (cette horloge 28, respectivement cette mémoire 29, étant par conséquent externes à la bicyclette 1).

Il est à noter que, pour ce mode particulier de réalisation, il est nécessaire que les horloges interne 14 et externe 28 soient synchronisées.

Ce procédé comprend tout d'abord, comme décrit ci-dessus, une étape (217) d'emprunt de la bicyclette 1, qui se traduit, concrètement, par le déverrouillage de la borne 2 correspondante sous la commande du CPU 5 de l'automate 4.

Cette étape (217) est immédiatement suivie d'une étape (219) de mémorisation par le CPU 5 de l'automate 4, de la valeur de son horloge 28 dans la mémoire externe 29.

La détection du roulage (220) est effectuée sans arrêt. Dès lors que l'arrêt de la bicyclette 1 est détecté, la valeur courante de l'horloge 14 du CPU 9 de la bicyclette 1 est stockée (221) dans la mémoire interne 15.

Dans l'hypothèse où l'arrêt de la bicyclette 1 correspond à sa remise à une borne 2 par l'utilisateur, mettant alors effectivement fin à la location, les CPU 5, 9 sont mis en communication (à supposer que le système soit alimenté en courant). Dès qu'il en reçoit l'instruction (222), le CPU 9 de la bicyclette 1 interroge sa mémoire interne 15 et transmet au CPU 5 de l'automate 4 la valeur mémorisée. Le CPU 5 de l'automate 4 prend alors en compte la valeur de l'horloge mémorisée au moment de l'emprunt, la différence des deux valeurs étant indicative de la durée réelle séparant l'emprunt de la bicyclette de sa remise, afin que cette durée soit prise en compte (223) pour le calcul du montant tarifaire de la location.

Une fois la transaction effectuée (224), la bicyclette est immédiatement disponible pour une location ultérieure (226).

Lorsque l'arrêt de la bicyclette 1 s'avère en fait temporaire, la mémoire interne 15 de la bicyclette 1 n'étant pas interrogée dans l'immédiat, le roulage est alors de nouveau détecté (227) dès lors que le locataire se sert à nouveau de la bicyclette 1.

La nouvelle valeur courante de l'horloge 14 est inscrite (221) dans la mémoire interne 15 dès lors qu'un nouvel arrêt est détecté. Cette succession d'étapes (220, 221, 222, 227) est répétée tant que la mémoire interne 15 n'est pas interrogée, les valeurs prises en compte (223) par le CPU 5 de l'automate 4 étant in fine, d'une part la valeur d'horloge stockée dans la mémoire externe 29 au moment de l'emprunt de la bicyclette 1 et, d'autre part, la valeur d'horloge mémorisée dans la mémoire interne 15 au moment du dernier arrêt de la bicyclette 1, c'est-à-dire, en pratique, au moment de la remise de cette dernière.

La différence de ces valeurs est indicative de la durée exacte séparant l'emprunt de la remise de la bicyclette 1, du fait de la synchronisation des horloges 15, 28.

En variante, il est possible, au lieu de mémoriser dans la mémoire externe 28 la valeur d'horloge du CPU 5 de l'automate 4, d'y mémoriser la valeur d'horloge du CPU 9 de la bicyclette 1 au moment du déverrouillage de la borne 2 correspondante. Dans ce cas, la synchronisation des horloges des CPU n'est pas nécessaire.

Quoi qu'il en soit, les résultats (et donc les avantages) obtenus dans le troisième mode de réalisation sont les mêmes que dans le cas des premier et second modes de réalisation.

On aura compris que, l'emprunt (17 ; 117 ; 217) de la bicyclette 1 mis à part, l'ensemble des étapes (18-27 ; 118-127 ; 219-227) décrites ci-dessus sont effectuées de manière automatique, au moyen d'une programmation appropriée des CPU 5 et 9.

## Revendications

1. Procédé de gestion d'une flotte de véhicules (1) adaptés pour être verrouillés sur des postes de verrouillage fixes (2), qui communiquent avec au moins un système de gestion (4, S) des véhicules (1), chaque véhicule (1) comprenant un circuit électronique (9) doté d'une mémoire (15) et adapté pour communiquer avec un des postes de verrouillage (2) lorsque ledit véhicule (1) est verrouillé sur ce poste de verrouillage (2), ce procédé comprenant les étapes suivantes :
- emprunt d'un véhicule (1) ;
- détection d'un mouvement du véhicule (1) ;
- détection de l'arrêt du véhicule ;
- mémorisation, dans une mémoire (15) interne au véhicule (1), d'un paramètre indicatif du temps écoulé entre l'emprunt et l'arrêt du véhicule (1) ;
- verrouillage du véhicule (2) sur un poste de verrouillage (2) ;
- détection de ce verrouillage par le dispositif de gestion (4, S) des véhicules (1) ;
- transmission dudit paramètre temporel au dispositif de gestion (4, S) par l'intermédiaire du poste de verrouillage (2).

2. Procédé selon la revendication 1, comprenant en outre une étape de détermination d'un montant de transaction par le dispositif de gestion (4, S) en fonction dudit paramètre temporel.

3. Procédé selon la revendication 1 ou 2, comprenant une étape de mise en route d'un compteur temporel (16) dès lors qu'un mouvement du véhicule (1) est détecté.

4. Procédé selon la revendication 3, dans lequel ladite étape de mémorisation consiste à mémoriser la valeur courante du compteur temporel (16) dès lors que l'arrêt du véhicule (1) est détecté.

5. Procédé selon la revendication 3 ou 4, comprenant en outre une étape d'interrogation de la mémoire interne (15).

6. Procédé selon la revendication 5, comprenant en outre une étape de transaction prenant en compte la valeur mémorisée.

7. Procédé selon la revendication 6, comprenant en outre une étape d'initialisation et d'arrêt du compteur (16).

8. Procédé selon l'une des revendications 5 à 7, dans lequel lesdites étapes d'interrogation de la mémoire interne (15), de transaction et/ou d'initialisation et d'arrêt du compteur (16) sont effectuées sous la commande d'un automate (4) extérieur au véhicule (1).

9. Procédé selon la revendication 1, comprenant une étape de mémorisation, dans une première zone de la mémoire interne (15), de l'heure courante dès lors qu'un mouvement du véhicule (1) est détecté.

10. Procédé selon la revendication 9, comprenant en outre une étape de mémorisation, dans une seconde zone de la mémoire interne (15), de l'heure courante dès lors que l'arrêt du véhicule (1) est détecté.

11. Procédé selon la revendication 10, comprenant en outre une étape d'interrogation de la mémoire interne (15).

12. Procédé selon la revendication 11, comprenant en outre une étape de transaction prenant en compte la différence entre les valeurs mémorisées dans les première et seconde zones de la mémoire interne (15).

13. Procédé selon la revendication 11 ou 12, dans lequel lesdites étapes d'interrogation de la mémoire interne (15) et/ou de transaction sont effectuées sous la commande d'un automate (4) extérieur au véhicule (1).

14. Procédé selon la revendication 1, comprenant une étape de mémorisation, dans une mémoire (29) externe au véhicule (1), de l'heure courante dès lors que le véhicule (1) est emprunté.

15. Procédé selon la revendication 14, dans lequel l'heure courante mémorisée dans la mémoire externe (29) est fournie par une horloge (14) interne au véhicule (1).

16. Procédé selon la revendication 14, dans lequel l'heure courante mémorisée dans la mémoire externe (29) est fournie par une horloge (28) externe au véhicule (1).

17. Procédé selon l'une des revendications 14 à 16, comprenant en outre une étape de mémorisation, dans ladite mémoire interne (15), de l'heure courante dès lors que l'arrêt du véhicule (1) est détecté.

18. Procédé selon la revendication 17, comprenant en outre une étape d'interrogation de la mémoire interne (15).

19. Procédé selon la revendication 18, comprenant en outre une étape de transaction prenant en compte la différence entre l'heure mémorisée dans la mémoire interne (15) et l'heure mémorisée dans la mémoire externe (29).

20. Procédé selon la revendication 18 ou 19, dans lequel lesdites étapes d'interrogation de la mémoire interne (15) et/ou de transaction sont effectuées sous la commande d'un automate (4) extérieur au véhicule (1).

21. Système de gestion d'une flotte de véhicules (1) qui, pour la mise en oeuvre du procédé selon l'une des revendications 1 à 20, comprend :
- une pluralité de véhicules (1) ;
- une pluralité de postes (2) de verrouillage desdits véhicules (1) ; et
- un dispositif de gestion (4, S) des véhicules, apte à commander à distance les postes (2) de verrouillage ;
système dans lequel chaque véhicule (1) comprend :
- des moyens (12) de détection d'un mouvement et de l'arrêt du véhicule (1) ;
- un circuit électronique (9) doté d'une mémoire (15) et adapté pour communiquer avec un des postes de verrouillage (2) lorsque ledit véhicule (1) est verrouillé sur ce poste de verrouillage (2) ;
- des moyens pour inscrire dans la mémoire (15) un paramètre temporel lié au mouvement et à l'arrêt du véhicule,
et dans lequel chaque poste (2) de verrouillage est muni de moyens de communication à distance avec le dispositif de gestion (4, S).
